# EUROPÄISCHE PATENTSCHRIFT

(11) **EP 0 922 683 B1**
(45) Veröffentlichungstag und Bekanntmachung des Hinweises auf die Patenterteilung: **14.02.2001**
(21) Anmeldenummer: 98121848.0
(22) Anmeldetag: 17.11.1998
(51) Int. Cl.: C04B 40/00, C04B 28/02

(54) **Spritzbindemittel und dessen Verwendung**
Sprayable binder and its application
Liant pulvérisable et son utilisation

(30) Priorität: 08.12.1997 DE 19754446
(43) Veröffentlichungstag der Anmeldung: 16.06.1999
(73) Patentinhaber: DYCKERHOFF AKTIENGESELLSCHAFT, D-65203 Wiesbaden (DE)
(72) Erfinder: Deuse, Thomas, 63075 Offenbach (DE); Mann, Kurt, 59269 Beckum (DE)
(74) Vertreter: Patentanwälte Dr. Solf & Zapf

(56) Entgegenhaltungen:
- WO-A-96/36576
- FR-A- 345 421
- GB-A- 355 902
- GB-A- 370 878
- GB-A- 522 172
- GB-A- 1 075 459
- US-A- 1 989 892
- US-A- 5 098 612
- CHEMICAL ABSTRACTS, vol. 114, no. 20, 20. Mai 1991 Columbus, Ohio, US; abstract no. 191349a, H. GUENTHER, ET AL.: Seite 362; XP000189923 & DD 284 126 A (ID.)

## Beschreibung

Die Erfindung betrifft ein Verfahren zur Herstellung eines Spritzbetons oder Spritzmörtels.

Unter Spritzbeton versteht man einen Beton, der durch Spritzgeräte mit hoher Auftreffgeschwindigkeit auf z.B. Flächen aufgetragen und bei diesem Vorgang verdichtet wird. Derartige Spritzbetone werden beispielsweise bei der Auskleidung von Tunnelbauwerken eingesetzt. Gemäß der Richtlinie Spritzbeton des österreichischen Betonvereins, welche auch in Deutschland angewandt wird, reichen die Aufgaben des Spritzbetons von der Herstellung einer bestimmten Oberflächenbeschaffenheit (z.B. Unterlage für Folienisolierung), Auffüllen von Hohlräumen (z.B. Klüfte, Überprofile) und Gebirgsversiegelung über die Herstellung von Bauteilen mit Sicherungs- und Stützfunktion beispielsweise Außenschalen von Hohlraumbauten sowie Böschungs-, Baugruben- und Hangsicherungen bis hin zur Herstellung von Außenschalen von Hohlraumbauten unter bestehenden Bauwerken und geringer Überlagerung, einschaligen Tunnelauskleidungen, Stützelementen von Böschungs- und Aushubflächen und Spritzbetonwänden für Wasserbehälter.

Im allgemeinen wird vom Spritzbeton erwartet, daß er in kurzer Zeit erstarrt und erhärtet und eine ausreichende Festigkeit entwickelt, damit er seine gebirgssichernde und stabilisierende Wirkung, beispielsweise im Tunnelbau, schnell entfalten kann. Das schnelle Erstarren darf jedoch nicht zu schnell erfolgen, da ansonsten nachfolgend aufgebrachter Spritzbeton nicht mehr in den vorhergehenden Lagen eingebettet werden kann und von den vorher gespritzten Flächen abfließt oder abprallt.

Ausgangsstoffe für die Herstellung eines Spritzbetons sind Bindemittel, Zuschlagstoffe, Zusatzstoffe, Zusatzmittel sowie Wasser.

Als Zuschlagstoffe für Spritzbetone werden üblicherweise mineralische Zuschläge wie Kies, Splitt, Sand bzw. Schotter mit Rundoder Brechkorn eingesetzt. Die üblicherweise verwendeten Zuschläge weisen Sieblinienbereiche nach DIN 1045 von 0 bis 8 mm auf, wobei Sieblinien B 8 oder AB 8 angestrebt werden. Darüber hinaus können auch Fasern beispielsweise Mineral- oder Glasfasern sowie Stahl- und Kunststoff fasern zugegeben werden. Des weiteren können auch bekannte Leichtzuschlagstoffe verwendet werden.

Als Zusatzstoffe werden u.a. synthetische Kieselsäureprodukte wie Kieselrauch oder dergleichen sowie Silikastaub eingesetzt. Insbesondere Silikastaub verbessert das Haftverhalten von Spritzbetonen.

Als Betonzusatzmittel werden u.a. Erstarrungsbeschleuniger eingesetzt. Darüber hinaus ist es auch möglich, Erstarrungsverzögerer einzusetzen und die Wirkung der Verzögerer am Einbauort gezielt durch Aktivatoren aufzuheben.

Weitere mögliche Zusatzmittel sind Verflüssiger, Fließmittel, Luftporen bildende Verflüssiger und Luftporenbildner.

Bei den Spritzverfahren für Spritzbeton wird grundsätzlich zwischen dem Trockenspritzverfahren und dem Naßspritzverfahren unterschieden. Für diese Verfahren ist jeweils eine unterschiedliche Zementsorte und/oder eine andere Betonsorte zu verwenden.

Konventioneller Trockenspritzbeton wird aus Normzement als Bindemittel und naturfeuchten Zuschlägen (3 bis 5 % Feuchte) im Transportbetonwerk hergestellt und mittels Fahrmischer zur Baustelle transportiert. Das Material wird innerhalb von etwa 1,5 Stunden nach dem Anmischen mittels konventioneller Spritzmaschinen unter Erstarrungsbeschleunigerzugabe verarbeitet. Bei der Verwendung von Normzementen im konventionellen Trockenspritzverfahren müssen zusätzliche chemische Mittel zugegeben werden, mit welchen die Betoneigenschaften eingestellt werden. Beispielsweise muß eine lange Verarbeitbarkeit insbesondere wegen des Mischertransports mit Verzögerern eingestellt werden. Diese Wirkung muß an der Baustelle mit Aktivatoren oder Beschleunigern aufgehoben werden. Nachteilig bei dem konventionellen Trockenspritzbeton ist, daß seine Eigenschaften, insbesondere ein gewünschter Verlauf der Frühfestigkeitsentwicklung nicht immer optimal einstellbar sind.

Um den Spritzbeton besser auf die Anforderungen an der Einbaustelle einzustellen, sind spezielle Spritzbindemittel entwickelt worden.

Diese speziellen Spritzbindemittel für die Verwendung in einem Spritzbeton werden gemäß der Richtlinie Spritzbeton des österreichischen Betonvereins in SBM T und SBM FT unterschieden. Diese Spritzbindemittel weisen sehr kurze Reaktionszeiten auf, weshalb keine Beschleuniger zugegeben werden müssen. Durch die nicht erforderliche Beschleunigerzugabe an der Baustelle wird eine häufige Fehlerursache durch falsches Dosieren des Beschleunigers ausgeschlossen.

SBM T sind Spritzbindemittel, welche eine Reaktionszeit von unter 1 Minute aufweisen. Aufgrund der sehr kurzen Reaktionszeit dieser Bindemittel können diese nicht mit feuchten Zuschlägen verwendet werden. Die Bindemittel SBM T werden deshalb in sogenannten Werktrockenmischungen verwendet. Werktrockenmischung heißt, daß die festen Bestandteile dieser Betone in einem Betonwerk trocken vorgemischt werden. Die Komponenten dieser Werktrockenmischungen müssen dabei ofentrocken sein. Die höchstzulässige Feuchtigkeit beträgt 0,2 Masse-%. Die derart hergestellten Werktrockenmischungen können nach der Herstellung gelagert bzw. zu einer Baustelle versandt werden. Werktrockenmischungen für die Verwendung in Spritzbetonen werden im Hinblick auf die Staubentwicklung bei der Verarbeitung an der Baustelle, und damit auf Arbeitssicherheit und Arbeitshygiene zunehmend kritisch beurteilt.

Spritzbindemittel SBM FT weisen eine abgestimmte Reaktionszeit von 1 bis 3 Minuten auf. Aufgrund dieser abgestimmten Reaktionszeit können sie zur Herstellung von Spritzbeton mit feuchten z.B. naturfeuchten Zuschlägen (Wassergehalt in der Regel 2 bis 4 Masse-%) verwendet werden. Die begrenzte Verarbeitungszeit des Spritzbindemittels erfordert, sofern feuchte Zuschläge verwendet werden, eine abgestimmte Verfahrenstechnik. Diese Bindemittel werden mit einem z.B. naturfeuchten Zuschlag sowie gegebenenfalls Zusatzmitteln und Zusatzstoffen vor Ort, das heißt an der Baustelle fertig gemischt und anschließend sofort mittels einer Spritzmaschine verarbeitet. Nach dem Anmischen des Bindemittels mit dem naturfeuchten Zuschlagstoff ist eine längere Lagerung nicht mehr möglich.

Da dieses SBM FT nur eine begrenzte Zeit mit naturfeuchtem Zuschlag unbeschadet übersteht, wurden spezielle Maschinen entwickelt, welche das Spritzbindemittel sowie die naturfeuchten Zuschläge getrennt bevorraten, dosieren und mischen. Problematisch für die Baustelle sind die unpraktischen sehr großen Abmessungen und der Wartungs- und Bedienungsaufwand dieser Maschinen sowie die aufwendige erforderliche Logistik zur Bevorratung und Beschickung mit Zement und Zuschlag. Insbesondere bei Tunnelbauvorhaben, bei denen naturgemäß der Platz auf der Baustelle begrenzt ist, sind dies erhebliche Nachteile.

Beim Naßspritzverfahren wird ein Naßmischgut (Pumpfrischbeton), das heißt ein bereits mit ausreichend Hydratationswasser versehener fließfähiger Beton verspritzt.

Der Naßspritzbeton wird üblicherweise mittels ferngesteuerter Spritzarme bzw. Spritzroboter aufgetragen. Aufgrund des großen Gewichts der geförderten Frischbetonmengen und der schweren Spritzausrüstung ist eine händische Ausführung dieser Spritzarbeiten nicht möglich. Mit den genannten Spritzarmen ist es möglich, größere Leitungsdurchmesser und höhere Maschinenleistungen als bei händischer Ausführung zu verwenden, wodurch höhere Auftragsleistungen und größere zusammenhängende Auftragsflächen resultieren können. Das Bedienpersonal einer Spritzvorrichtung für Naßspritzbeton befindet sich außerhalb des direkten Rückprall- und Staubeinflußbereiches. Hierdurch wird für den Maschinenbediener eine höhere Arbeitshygiene und -sicherheit gewährleistet.

Beim Naßspritzverfahren werden dem Naßspritzbeton üblicherweise Erstarrungsbeschleuniger zugegeben. In der Regel ist der Erstarrungsbeschleuniger pulverförmig oder flüssig und wird 3 bis 5 Meter vor der Düse direkt in den Förderschlauch zudosiert, wodurch eine ausreichende Vermischung des Erstarrungsbeschleunigers mit dem Pumpbeton erreicht werden soll. Bei diesem Verfahren ist von Nachteil, daß der apparative Aufwand sehr hoch ist. Darüber hinaus muß auch der Naßspritzbeton mit einem Erhärtungsbeschleuniger entsprechend eingestellt werden. Des weiteren verursacht der große Sichtabstand des Düsenführers von der Auftragsfläche und die hohe Auftragsleistung eine erhebliche Erschwernis bei der Herstellung einer gleichmäßigen Spritzbetonoberfläche und Dicke. Vorteilhaft ist, daß an gefährlichen Einsatzorten das Personal aus sicherer Entfernung die Maschine bedienen kann.

Aus der WO 96/36576 A ist die Behandlung von Zement zur Herstellung von hydrophobierten und abbindebeschleunigtem Mörtel oder Beton bekannt. Zu diesem Zweck werden hydrophobierende Zusätze aus der Gasphase z.B. Silane, Silanole, Silicone etc. auf der Oberfläche von Zementpartikeln aufgebracht und weiter, um schnell abbindenden Zement zu erhalten, mit Metall und/oder Metalloxydschichten, ebenfalls aus der Gasphase abgeschieden, versehen.

Aus der GB 1 075 459 ist eine Bindemittelmischung bekannt, deren Teilchen mit Fettsäure und einem Erstarrungsbeschleuniger (Calciumchlorid) beschichtet sind. Beschrieben wird ein Verfahren, nachdem Zement, Stearinsäure und Calciumchlorid in einer Mühle gemischt und gemahlen werden, um das Produkt mit wasserabstoßenden Eigenschaften zu versehen. Ferner ist es aus dieser Druckschrift bekannt, das so erhaltene Produkt mit Sand und Wasser zu mischen, so daß sich eine betonartige Masse ergibt.

Aus Chemical Abstracts, Volume 114, Nr. 20 May 1991, Columbus, Ohio US; Abstract Nr. 191349a ist es bekannt, Gips mit 1 bis 4 % Wachs zu beschichten und zudem Salze, insbesondere Aluminiumsulfat zuzugeben.

Aufgabe der Erfindung ist es, ein Verfahren zur Herstellung und Verarbeitung eines Spritzbetons zu schaffen, welches einen Spritzbeton mit gleichbleibenden Eigenschaften ermöglicht sowie die Herstellungs- und Verarbeitungskosten senkt.

Die Aufgabe wird mit einem Verfahren mit den Merkmalen des Anspruch 1 gelöst. Vorteilhafte Ausbildungen sind in Unteransprüchen gekennzeichnet.

Das Bindemittel ist beispielsweise ein Bindemittel der Klassifikation SBM T oder SBM FT, also ein Spritzbetonbindemittel, welches über eine sehr kurze Erstarrungs- bzw. Reaktionszeit verfügt. Erfindungsgemäß wird dieses, für Spritzbetone durchaus übliche Bindemittel hydrophobiert und anschließend mit alkalifreiem Beschleuniger behandelt. Ein möglicher, alkalifreier Beschleuniger ist beispielsweise ein basisches Aluminiumsulfat, z.B. ein Aluminiumhydroxisulfat. Dieses erfindungsgemäße hydrophobierte und mit alkalifreiem Beschleuniger behandelte Bindemittel kann bereits im Werk mit naturfeuchten Zuschlägen, also Zuschlägen wie sie angeliefert werden, ohne Trocknung zu einer Werkvormischung vermischt werden. Übliche Zuschlagsfeuchten liegen zwischen 2 und 4 %. Zuschläge, welche zu wenig Feuchtigkeit für eine ausreichende Hydration des Bindemittels enthalten, können auf einfache Weise mit mehr Wasser versehen werden. Diese Werkvormischung kann anschließend beispielsweise mit Fahrmischern als Transportbeton zur Einbaustelle transportiert werden. Obwohl es sich bei dem Bindemittel um ein an sich sehr schnell reagierendes Bindemittel handelt, wird mit der Hydrophobierung erreicht, daß dieses Bindemittel die für Transportbeton erforderlichen Verarbeitbarkeit von über eineinhalb Stunden aufweist, jedoch ohne die Zugabe zusätzlicher Verzögerer. An der Einbaustelle kann dieses Bindemittel bzw. der mit dem Bindemittel hergestellte Beton ohne weitere Mischvorgänge und ohne die weitere Zugabe von Beschleunigern oder anderen Zusatzmitteln verspritzt werden.

Es hat sich überraschenderweise herausgestellt, daß ein derartiger Spritzbeton, welcher zunächst hydrophobiert und anschließend mit alkalifreien Beschleunigern behandelt wurde, über die Misch- und Transportzeiten hinaus über mehrere Stunden und sogar Tage seine Reaktivität behält, so daß dieser Spritzbeton auf Halde oder in Silos an der Einbaustelle vorgehalten werden kann, ohne wesentlich zu reagieren. Ein derartiges Verhalten ist durch eine Hydrophobierung allein nicht zu erreichen, sondern trat lediglich als synergistischer Effekt zusammen mit der Behandlung durch alkalifreie Beschleuniger auf, wobei eine Erhöhung der Menge von alkalifreiem Beschleuniger den Beginn erster merklicher Hydratationsreaktionen beträchtlich hinausgeschoben hat.

Eine erfindungsgemäße Bindemittelmischung zur Verwendung in einem Spritzbeton weist im einfachsten Fall als Hauptkomponente einen sulfatreduzierten bzw. sulfatarmen Portlandzement (CEM I) gemäß DIN 1164 auf. Gegebenenfalls kann dieses Bindemittel puzzolanische oder latent hydraulische Zusatzstoffe wie Hochofenschlacke oder Flugasche enthalten. Darüber hinaus sind zusätzlich auch Portlandkompositzemente (CEM II), Hochofenzemente (CEM III) sowie bauaufsichtlich zugelassene Zemente als Bestandteile oder Mischung oder sogar als Hauptkomponente möglich. Beispielsweise kann auch Tonerdeschmelzzement als zusätzliches hydraulisches Bindemittel enthalten sein. Darüber hinaus können gegebenenfalls weitere trockene Zusatzstoffe und Zusatzmittel enthalten sein. Die Erstarrungszeit der Bindemittelmischung kann über die Gehalte der eingesetzten Bestandteile, aber auch durch die Mahlfeinheit der Bindemittelmischung variiert und eingestellt werden.

Geeignete Hydrophobierungsmittel sind unter anderem Stearin- und Ölsäure (Fettsäuren), Wachse, Salze der Fettsäuren (Natrium-, Calcium-, Ammonium-, Aluminium- und Zinkstearat), Harze und Natriumoleat. Darüber hinaus sind Kalkseifen und Mineralölemulsionen nicht ausgeschlossen. Darüber hinaus können auch Silane, Siloxane und Silikonöle als Hydrophobierungsmittel Verwendung finden.

Geeignete alkalifreie Beschleuniger sind beispielsweise basische Aluminiumsulfate wie sie als Beschleuniger für Zement Verwendung finden, insbesondere basische Aluminiumsulfate nach der Formel Al(OH)ₐ (SO₄)_{b} wobei b = 0,05 bis 0,4 und a = 3 bis 2 x b.

Für die Herstellung eines derartigen hydrophobierten Bindemittels zur Verwendung in einem Spritzbeton werden die Rohstoffe, also beispielsweise Portlandzementklinker, Hüttensand und gegebenenfalls weitere Bestandteile wie Tonerdezement einer Zementmühle zudosiert und unter Zugabe von gewünschten Mengen an Sulfatträgern gemeinsam vermahlen. Während der Vermahlung wird nach Art eines Mahlhilfsmittels das Hydrophobierungsmittel in Mengen von 0,02 - 5 M-% zudosiert, also i. a. eingedüst. Der weitere Verfahrensablauf entspricht dem der üblichen Herstellung von Zementen.

Darüber hinaus ist es auch möglich, die Hydrophobierung nach dem Aufmahlen der mineralischen Bestandteile durchzuführen, wobei der fertige Zement im sogenannten und bekannten Sprühmischverfahren mit dem Hydrophobierungsmittel behandelt wird. Hierbei wird in einem speziellen Mischaggregat das Hydrophobierungsmittel feinstzerstäubt auf das pulverförmige Bindemittel gedüst und mit diesem gemischt.

Nachdem das Bindemittel hydrophobiert worden ist, wird das Bindemittel mit dem alkalifreien Beschleuniger behandelt. Die Behandlung kann entweder in der Aufsprühung einer Lösung liegen, es kann jedoch auch ein Bepudern des Bindemittels mit dem sehr feinen Beschleuniger stattfinden, wobei anschließend intensiv gemischt wird. Ziel ist eine möglichst gleichmäßige Anlagerung von Beschleuniger an der Hydrophobierungsbeschichtung des Bindemittels, worauf die Verfahrenstechnik entsprechend abzustellen ist. Geeignete Mengen sind insbesonder 0,2 bis 6 M-% Beschleuniger bezogen auf die trockene Bindemittelmischung. Der Beschleuniger kann aber auch während des Mahlens zugegeben werden.

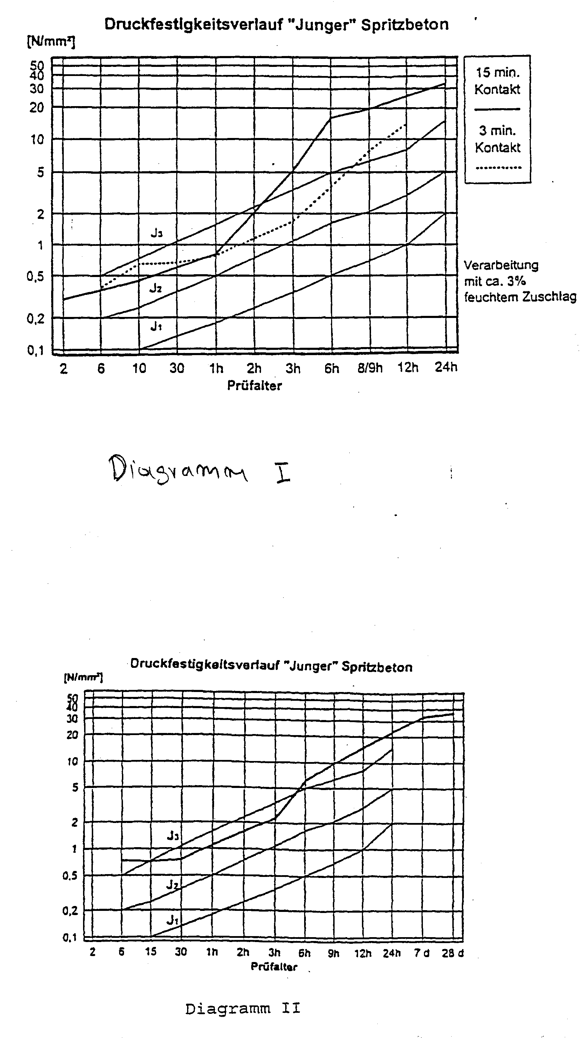

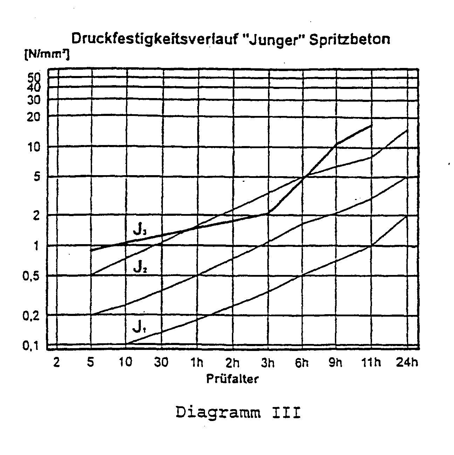

Um mit diesem Bindemittel bzw. dieser Bindemittelmischung einen erfindungsgemäßen Spritzbeton herzustellen, wird der naturfeuchte Zuschlagstoff einer gewünschten Körnung und Sieblinie, beispielsweise B 8 nach DIN 1045 (gemäß Abb. 1) in einer Mischvorrichtung vorgelegt.

Dieser naturfeuchte Zuschlagstoff kann beispielsweise eine Feuchte von 1 bis 6 %, insbesondere 2 bis 4 % aufweisen. Für die Herstellung von Faserspritzbetonen können als weitere oder ausschließliche Zuschlagstoffe auch metallische und/oder organische oder mineralische Fasern, beispielsweise Kohle-, Glas- oder Mineralfasern zugesetzt werden.

Für die Herstellung von Leichtspritzbetonen können als weitere oder ausschließliche Zuschlagstoffe organische und/oder mineralische Leichtzuschlagstoffe, insbesondere Polystyrolschaumkugeln, Bims, Perlit, Zeolith, Schaumglas, Microglashohlkugeln und weitere bekannte Leichtzuschlagstoffe zugegeben werden.

Dem Zuschlagstoff wird nun die Bindemittelmischung bzw. das Bindemittel zudosiert und beide werden miteinander vermischt. Als Zusatzstoffe können beispielsweise Silicastaub, Silicaemulsionen, synthetische Kieselsäure und weitere bekannte Zusatzstoffe zur Beeinflussung der Verarbeitbarkeit verwendet werden. Die fertige Mischung, also der Spritzbeton kann einem Fahrmischer aufgegeben werden und mit diesem zur Einbaustelle transportiert werden, wo er mittels Spritzen verarbeitet wird.

Obwohl das Bindemittel üblicherweise von seiner Zusammensetzung her einem Bindemittel mit kurzer Erstarrungszeit der Klassifikation SBM T oder SBM FT entspricht ist es nach der Erfindung überraschenderweise möglich, unter Verwendung des hydrophobierten und mit basischem Aluminiumsulfat behandeltem Bindemittels mit feuchten Zuschlägen eine Verarbeitungszeit von über 2,0 Stunden ohne den Zusatz von Verzögerungsmitteln zu erreichen. Vermutlich wird die Hydrophobierung des Bindemittels auch durch den Mischvorgang im wesentlichen nicht beeinträchtigt, da wesentliche Hydratationsreaktionsfortschritte in der Mischung während der Verarbeitungszeit nicht nachgewiesen werden können.

Es hat sich herausgestellt, daß eine starke Hydratationsreaktion erst nach dem Verspritzen des Betons eintritt. Es wird vermutet, daß erst durch die extremen Belastungen des Mörtels (Beschleunigung, Reibung, Verzögerung) während des Spritzens eine sich aus dem Hydrophobierungsmittel und den alkalifreien Beschleunigern gebildete Schutzhülle des Bindemittels so weit verletzt wird, daß es zu Hydratationsreaktionen kommen kann. Überraschenderweise hat sich herausgestellt, daß die Schutzhülle das Verhalten des erfindungsgemäßen Spritzbetons gegenüber einem Spritzbeton mit dem gleichen Bindemittel, jedoch ohne Hydrophobierung und Beschleuniger nicht negativ beeinflußt, sondern quasi katalytisch die Frühfestigkeit verbessert.

Überraschenderweise steigt die Frühfestigkeit mit der Lagerungsdauer des fertig gemischten Betons, was bei einer reinen Hydrophobierung nicht beobachtet werden konnte. Andererseits konnten mit alkalifreien Beschleunigern, insbesondere basischen Aluminiumsulfaten als Zusatz allein derartige Festigkeitsverläufe auch nicht erzielt werden, weshalb ein - überraschender - synergistischer Effekt in der Kombination aus Hydrophobierung und Behandlung mit alkalifreien Beschleunigern - insbesondere in dieser Reihenfolge - erzielt wird.

Auch die erhebliche Verlängerung der Lagerungsdauer eines fertig gemischten Betons konnte allein mit einer Hydrophobierung nicht erreicht werden, sondern wurde erst mit der Kombination aus Hydrophobierung und alkalifreiem Beschleuniger erreicht. Es wird vermutet, daß diese Wirkung darauf beruht, daß zwischen Hydrophobierungsmittel, dem alkalifreien Beschleuniger, dem Zement und dem vorhandenem Wasser eine noch nicht geklärte Vorreaktion abläuft, bei der in Abhängigkeit von der Dosiermenge des alkalifreien Beschleunigers eine kombinierte Schutzhülle um das reaktive sulfatarme Zementkorn gebildet wird. Erst beim Auftreffen auf der Bearbeitungsfläche mit Geschwindigkeiten > 100 km/h und Beanspruchung durch Schlag und Reibung wird diese Hülle offenbar aufgebrochen und die schnelle Spritzzementreaktion kann beginnen.

Zwar war das Erstarren eines vorgelagerten Spritzbetons mit 0,5 M-% alkalifreiem Beschleuniger lediglich geringfügig schlechter als beim sofort verspritzten Material, die Frühfestigkeiten des vorgelagerten Materials stiegen aber schnell gegenüber dem sofort verspritzen Material und erreichte nach ca. 2 Stunden auch den Frühfestigkeitsbereich J3 gemäß dem Diagramm I.

Das Diagramm I zeigt die Druckfestigkeitsverläufe sogenannter junger Spritzbetone. Unter jungem Spritzbeton versteht die Richtlinie Spritzbeton Spritzbeton bis zu einem Alter von 24 Stunden. Die dargestellten Bereiche J1, J2 und J3 sind Druckfestigkeitsbereiche gemäß der Forderungen der Richtlinie Spritzbeton. Die dicker durchgezogene Linie stellt einen erfindungsgemäßen Spritzbeton mit 15 min Vorlagerung dar, während der Druckfestigkeitsverlauf, welcher mit den dünner durchgezogenen Linien dargestellt ist, die Festigkeitsbereiche des Spritzbetons gemäß Richtlinie des österreichischen Betonvereins darstellen. Die gepunktete Linie stellt einen sofort (3 min) verarbeiteten erfindungsgemäßen Spritzbeton dar.

Die Frühfestigkeit der beiden erfindungsgemäßen Spritzbetone liegen anfangs im Bereich bekannter Spritzbetone. Nach etwa lh zeigt der länger vorgelagerte erfindungsgemäße Spritzbeton einen steilen Anstieg der Festigkeit, der kürzer vorgelagerte erfindungsgemäße Spritzbeton zeigt einen ähnlichen Anstieg des Festigkeitsverlaufes nach ca. 3h.

Überraschenderweise hat sich auch herausgestellt, daß die Verwendung des hydrophobierten Spritzbindemittels bei den bestehenden Verfahren, wie der Verwendung von Werktrockenmischungen oder dem Vorort-Herstellen von Spritzbeton unter der erfindungsgemäßen Verwendung naturfeuchter Zuschläge erhebliche Vorteile gegenüber den herkömmlichen, bekannten Spritzbindemitteln ergibt.

Bei Versuchen, bei denen Spritzbetonwerktrockenmischungen unter Verwendung des erfindungsgemäßen Spritzbindemittels hergestellt wurden, ergab sich, daß die Spritzeigenschaften eines Betons unter Verwendung eines erfindungsgemäßen Spritzbindemittels gegenüber einem herkömmlichen Beton leicht verbessert waren. Insbesondere verhielt sich der Spritzbeton mit erfindungsgemäßem Bindemittel gegenüber einem üblichen Beton besser, das heißt weniger Material prallte von der aufgespritzten Fläche ab.

Neben diesen unerwartet großen Unterschieden im Frühfestigkeitsverlauf wurden auch Unterschiede im Hydratations- und Trocknungsverhalten des aufgespritzten Betons festgestellt. Während der Spritzbeton gemäß des Standes der Technik nach eipigen Stunden das typische helle grau eines erhärteten und im wesentlichen ausgetrockneten Spritzbetons aufwies, wies der erfindungsgemäße Spritzbeton nach wie vor die dunkelgraue Farbe eines noch feuchten Betons auf. Es wird vermutet, daß die Schutzschicht eine geringfügig längere offene Zeit ermöglicht, wodurch auch eine bessere Verdichtung erreicht wird.

Bei der Verwendung eines erfindungsgemäßen Spritzbindemittels ist es nicht notwendig in einer Werktrockenmischung bzw. Werkvormischung ofentrockene Zuschlagstoffe zu verwenden. Die Zuschlagstoffe können mit einer gewissen Feuchte zugesetzt werden, da das erfindungsgemäße Spritzbindemittel relativ wasserunempfindlich ist. Beispielsweise können die Zuschläge mit einer Berg- oder Grubenfeuchte von 0,8 bis 1 % verwendet werden.

Hierbei ist von Vorteil, daß eine sehr kostenintensive Trocknung der Zuschlagstoffe für die Verwendung in Werkvormischungen entfällt. Darüber hinaus wird durch die höhere Feuchte eine sehr viel geringere Staubentwicklung erreicht, was arbeitshygienisch und arbeitssicherheitstechnisch positiv zu beurteilen ist. Zu diesen Vorteilen kommt die günstigere Festigkeitsentwicklung hinzu.

Bei weiteren Versuchen wurde Spritzbeton als Werktrockenmörtel unter Verwendung des erfindungsgemäßen Spritzbindemittels hergestellt. Um die Staubentwicklung zu minimieren, wurde jedoch im Schlauch von der Pumpe zur Düse eine Vorbefeuchtung des Trockenbetons vorgenommen. Ein derart erzeugter Spritzbeton unter Verwendung des erfindungsgemäßen Spritzbindemittels zeigte gemäß Diagramm II eine im Normbereich der Richtlinie Spritzbeton liegende Festigkeitsentwicklung die nach ca. 3h deutlich ansteigt und nach ca. 5h über der Festigkeit von bekannten Spritzbetonen liegt. D.h. selbst wenn ein erfindungsgemäßer Spritzbeton mit herkömmlichen Methoden verarbeitet wird,zeigt er gegenüber bekannten Betonen ein verbessertes Festigkeitsentwicklungsverhalten. Auch bei diesem Spritzbindemittel wurden 0,5 M-% alkalifreier Beschleuniger verwendet.

Die dargestellten Bereiche J1, J2 und J3 sind Druckfestigkeitsbereiche gemäß der Forderungen der Richtlinie Spritzbeton. Die dicker durchgezogene Linie stellt den erfindungsgemäßen Spritzbeton dar.

In einem weiteren Versuch wurde ein erfindungsgemäßer Spritzbeton als Werktrockenmörtel unter Verwendung eines Zuschlagstoffgemisch mit relativ hoher Feuchtigkeit z.B. mit 0,5 % Feuchtigkeit angemischt und vor der Verarbeitung 36 Stunden gelagert und anschließend verspritzt.

Es konnte festgestellt werden, daß das erfindungsgemäße Bindemittel gegen Feuchtigkeitsschwankungen im Zuschlag relativ unempfindlich war. Darüber hinaus war von Vorteil, daß das erfindungsgemäße Spritzbindemittel weder im Bevorratungs- noch im Dosier- noch im Mischbereich die ansonsten für Spritzbindemittel negative Neigung aufwies, anzubacken. Hierdurch werden der Reinigungs- und Wartungsaufwand für die bekannten Mischaggregate erheblich verringert. Ein weiterer Vorteil der Verwendung des erfindungsgemäßen Spritzbindemittels bei diesem Verfahren ist, daß während der ersten Stunden der Erstarrungsverlauf dem Erstarrungsverlauf bekannter Spritzbetone entspricht, jedoch im weiteren Verlauf stärker ansteigt, so daß nach 24 Stunden im allgemeinen Festigkeiten erreicht werden, die über den in der Richtlinie Spritzbeton geforderten Druckfestigkeiten liegen.

Die Erfindung schafft ein Verfahren zum Herstellen eines Spritzbetons, welches es ermöglicht, die bisherige angewandte Verfahrenstechnik erheblich zu vereinfachen und durch Wegfall des bisherigen apparativen und logistischen Aufwands in großem Umfang Kosten zu sparen.

Darüber hinaus schafft die Erfindung einen Spritzbeton, welcher verbesserte Verarbeitungseigenschaften, ein verbessertes leichter steuerbares Erstarrungsverhalten und höhere Festigkeiten in ausgehärtetem Zustand aufweist.

Darüber hinaus kann das erfindungsgemäße Bindemittel auch mit den bekannten Verfahren verarbeitet werden, wobei in diesen Fällen eine verbesserte Verarbeitbarkeit und verbesserte Erstarrungs- und Festigkeitseigenschaften der Betone erreicht werden können.

Wesentlicher Vorteil des erfindungsgemäßen Verfahrens ist somit, daß ein Spritzbeton unter Verwendung eines hochreaktiven Spritzbindemittels wie ein konventioneller, Normzement enthaltender Trockenspritzbeton und sogar wie ein üblicher Transportbeton hergestellt und verarbeitet werden kann, wodurch die kostenintensiven Großgeräte zum Bevorraten und Mischen an der Baustelle vermieden werden und die bei konventionellen Betonen vorhandenen Fehler- und Kostenquellen wie Zugabe von Zusatzmitteln vermieden werden.

## Patentansprüche

1. Verfahren zur Herstellung eines Spritzbetons, wobei ein mineralisches, hydraulisches Bindemittel, zumindest teilbereichsweise zunächst mit einem Hydrophobierungsmittel und anschließend mit einem alkalifreien Beschleuniger beschichtet wird und anschließend mit feuchten mineralischen Zuschlägen in üblichen Mengen, gegebenenfalls Zusatzstoffen und/oder Zusatzmitteln gemischt wird und die so erhaltene Mischung zur Erhöhung der erzielbaren Frühfestigkeit eine vorbestimmte Zeit gelagert wird und anschließend derart verspritzt wird, daß die Umhüllung des Bindemittels aufreißt.

2. Verfahren nach Anspruch 1,
**dadurch gekennzeichnet**,
daß das Spritzbeton vor dem Verspritzen 0,5 - 24 Stunden vorgelagert wird.

3. Verfahren nach Anspruch 1 und/oder 2
**dadurch gekennzeichnet,**
daß als Zuschlagstoffe Schotter und/oder Kies und/oder Splitt und/oder Sand mit Rund- oder Brechkorn verwendet werden.

4. Verfahren nach einem oder mehreren der Ansprüche 1 bis 3,
**dadurch gekennzeichnet**,
daß Zuschläge verwendet werden, welche eine Körnung von 0 bis 8 mm aufweisen.

5. Verfahren nach Anspruch 3 und/oder 4,
**dadurch gekennzeichnet**,
daß Zuschläge verwendet werden, welche Sieblinien B8 oder AB8 gemäß DIN 1045 aufweisen.

6. Verfahren nach einem oder mehreren der Ansprüche 1 bis 5,
**dadurch gekennzeichnet**,
daß als Zuschlagstoffe metallische und/oder organische und/oder mineralische Fasern zugesetzt werden.

7. Verfahren nach Anspruch 6,
**dadurch gekennzeichnet**,
daß Stahl- und/oder Kohle- und/oder Glas- und/oder Mineralfasern zugesetzt werden.

8. Verfahren nach einem oder mehreren der Ansprüche 1 bis 7,
**dadurch gekennzeichnet**,
daß als Zuschlagstoffe organische und/oder mineralische Leichtzuschlagstoffe zugesetzt werden.

9. Verfahren nach Anspruch 8,
**dadurch gekennzeichnet**,
daß als Leichtzuschlagstoffe Polystyrolschaumkugeln und/oder Bims und/oder Perlit und/oder Zeolit und/oder Schaumglas und/oder Microglashohlkugeln zugesetzt werden.

10. Verfahren nach einem oder mehreren der Ansprüche 1 bis 9,
**dadurch gekennzeichnet**,
daß als Zusatzstoffe Silicastaub und/oder Silicaemulsionen und/oder synthetische Kieselsäure sowie gegebenenfalls weitere bekannte Zusatzstoffe zur Beeinflussung der Verarbeitbarkeit zugesetzt werden.

11. Verfahren nach einem oder mehreren der Ansprüche 1 bis 10,
**dadurch gekennzeichnet**,
daß als Zusatzmittel Verflüssiger und/oder Fließmittel und/oder Luftporenbildner und/oder Dichtungsmittel und/oder Stabilisierer zugesetzt werden.

12. Verfahren nach einem oder mehreren der Ansprüche 1 bis 11,
**dadurch gekennzeichnet**,
daß die Zuschlagstoffe in naturfeuchtem Zustand verwendet werden.

13. Verfahren nach einem oder mehreren der Ansprüche 1 bis 12,
**dadurch gekennzeichnet**,
daß die Zuschlagstoffe mit einer Feuchtigkeit von 0,5 bis 6 M-% verwendet werden.

14. Verfahren nach einem oder mehreren der Ansprüche 1 bis 13,
**dadurch gekennzeichnet**,
daß die Zuschlagstoffe mit einer Feuchtigkeit von 2 bis 4 M-% verwendet werden.

15. Verfahren nach einem oder mehreren der Ansprüche 1 bis 14,
**dadurch gekennzeichnet**,
daß die Zuschlagstoffe und gegebenenfalls Zusatzstoffe in einer Mischvorrichtung vorgelegt und gemischt und anschließend die Bindemittelmischung zugesetzt wird und weiter gemischt wird, wobei gegebenenfalls Zusatzmittel zugegeben werden.

16. Verfahren nach einem oder mehreren der Ansprüche 1 bis 15,
**dadurch gekennzeichnet**,
daß der Spritzbeton einem Fahrmischer aufgegeben wird.

17. Verfahren nach einem oder mehreren der vorhergehenden Ansprüche,
**dadurch gekennzeichnet**,
daß der Spritzbeton derart verspritzt wird, daß die Auftreffgeschwindigkeit auf der Bearbeitungsfläche > 100 km/h beträgt.

18. Spritzbeton zur Verwendung in dem Verfahren nach einem oder mehreren Ansprüche 1 bis 18, enthaltend ein mineralisches, hydraulisches Bindemittel, insbesondere ein sulfatarmes Bindemittel, vorzugsweise Portlandzement, Portlandkompositzement, Hochofenzement, Eisenportlandzement oder Tonerdezement, und gegebenenfalls übliche Zusatzstoffe und Zusatzmittel, wobei die Komponenten des Bindemittels derart aufeinander abgestimmt sind, daß eine kurze Reaktionszeit für die hydraulische Reaktion erreicht wird, wobei die Bindemittelkörnchen zumindest teilbereichsweise eine schichtweise Umhüllung aus einem Hydrophobierungsmittel und darauf einem alkalifreien Beschleuniger aufweisen sowie einem feuchten Zuschlagstoff in üblichen Mengen, wobei Wasser in Mengen von 0,5 bis 6 M-% vorhanden ist.

19. Spritzbeton nach Anspruch 19,
**dadurch gekennzeichnet**,
daß der alkalifreie Beschleuniger an der hydrophobierenden Umhüllung angelagert ist.

20. Spritzbeton nach Anspruch 19 und/oder 20,
**dadurch gekennzeichnet**,
daß das Bindemittel als Hydrophobierungsmittel Stearin und/oder Ölsäure (Fettsäuren) aufweist.

21. Spritzbeton nach einem oder mehreren der Ansprüche 19 bis 21,
**dadurch gekennzeichnet**,
daß das Bindemittel als Hydrophobierungsmittel Wachse und/oder Salze der Fettsäuren aufweist.

22. Spritzbeton nach Anspruch 22,
**dadurch gekennzeichnet**,
daß das Bindemittel als Hydrophobierungsmittel Natrium- Calcium-, Ammonium-, Aluminium- und Zinkstearat aufweist.

23. Spritzbeton nach einem oder mehreren der Ansprüche 19 bis 23,
**dadurch gekennzeichnet**,
daß das Bindemittel als Hydrophobierungsmittel Harze und/oder Natriumoleate und/oder Kalkseifen und/oder Mineralölemulsionen aufweist.

24. Spritzbeton nach einem oder mehreren der Ansprüche 19 bis 24,
**dadurch gekennzeichnet**,
daß das Bindemittel als Hydrophobierungsmittel Silane und/oder Siloxane und/oder Silikonöle aufweist.

25. Spritzbeton nach einem oder mehreren der Ansprüche 19 bis 25,
**dadurch gekennzeichnet**,
daß das Bindemittel im wesentlichen einen hydrophobierten, sulfatreduzierten Portlandzement aufweist.

26. Spritzbeton nach Anspruch 26,
**dadurch gekennzeichnet**,
daß das Bindemittel einen SO₃-Gehalt von 1 bis 3 % aufweist.

27. Spritzbeton nach Anspruch 26 und/oder 27,
**dadurch gekennzeichnet**,
daß das Bindemittel einen SO₃-Gehalt von 2 - 2,5 % aufweist.

28. Spritzbeton nach einem oder mehreren der Ansprüche 19 bis 28,
**dadurch gekennzeichnet**,
daß das Bindemittel als Zusatzstoffe synthetische Kieselsäure, Silicastaub, Silicaemulsionen und weitere, die Verarbeitbarkeit des Betons beeinflussende bekannte Zusatzstofe aufweist.

29. Spritzbeton nach einem oder mehreren der Ansprüche 19 bis 29,
**dadurch gekennzeichnet**,
daß das Bindemittel als Zusatzmittel Verflüssiger und/oder Fließmittel und/oder Luftporenbildner und/oder Dichtungsmittel und/oder Stabilisierer enthält.

30. Spritzbeton nach einem oder mehreren der Ansprüche 19 bis 30,
**dadurch gekennzeichnet**,
daß die Komponenten des Bindemittels feinst aufgemahlen sind.

31. Spritzbeton nach einem oder mehreren der Ansprüche 19 bis 31,
**dadurch gekennzeichnet**,
daß der alkalifreie Beschleuniger ein amorphes basisches Aluminiumsulfat ist.

32. Spritzbeton nach einem oder mehreren der Ansprüche 19 bis 32,
**dadurch gekennzeichnet**,
daß das amorphe basische Aluminiumsulfat ein basisches Aluminiumsulfat mit der allgemeinen Formel Al (OH)ₐ (SO₄)_{b} ist, wobei b = 0,04 bis 0,4 und a = 3 bis 2 x b ist.

33. Spritzbeton nach einem oder mehreren der Ansprüche 19 bis 33,
**dadurch gekennzeichnet**,
daß der alkalifreie Beschleuniger in Mengen von 0,2 bis 6 M-% enthalten ist.

## Claims

1. Process for producing spray concrete, in which a mineral, hydraulic binder is coated on at least part of its surface firstly with a hydrophobicizing agent and subsequently with an alkali-free accelerator and is subsequently mixed with moist mineral aggregates in customary amounts and, if desired, additives and/or modifiers, and the mixture obtained in this way is stored for a predetermined time to increase the achievable early strength and is subsequently sprayed in such a way that the encapsulation around the binder is torn open.

2. Process according to Claim 1, characterized in that the spray concrete is stored for 0.5-24 hours before spraying.

3. Process according to Claim 1 and/or 2, characterized in that gravel and/or pebbles and/or chippings and/or sand having rounded particles or angular particles resulting from crushing are used as aggregates.

4. Process according to one or more of Claims 1 to 3, characterized in that aggregates having a particle size of from 0 to 8 mm are used.

5. Process according to Claim 3 and/or 4, characterized in that aggregates having grading curves B8 or AB8 in accordance with DIN 1045 are used.

6. Process according to one or more of Claims 1 to 5, characterized in that metallic and/or organic and/or mineral fibres are added as aggregates.

7. Process according to Claim 6, characterized in that steel fibres and/or carbon fibres and/or glass fibres and/or mineral fibres are added.

8. Process according to one or more of Claims 1 to 7, characterized in that organic and/or mineral lightweight aggregates are added as aggregates.

9. Process according to Claim 8, characterized in that polystyrene foam spheres and/or pumice and/or perlite and/or zeolite and/or foamed glass and/or hollow glass microspheres are added as lightweight aggregates.

10. Process according to one or more of Claims 1 to 9, characterized in that silica dust and/or silica emulsions and/or synthetic silica and, if desired, further known additives for influencing the processability are added as additives.

11. Process according to one or more of Claims 1 to 10, characterized in that fluidizers and/or flow improvers and/or air pore formers and/or sealants and/or stabilizers are added as modifiers.

12. Process according to one or more of Claims 1 to 11, characterized in that the aggregates are used in the naturally moist state.

13. Process according to one or more of Claims 1 to 12, characterized in that the aggregates used have a moisture content of from 0.5 to 6% by mass.

14. Process according to one or more of Claims 1 to 13, characterized in that the aggregates used have a moisture content of from 2 to 4% by mass.

15. Process according to one or more of Claims 1 to 14, characterized in that the aggregates and, if desired, additives are placed in a mixing apparatus and are mixed, and the binder mixture is subsequently added and mixing is continued, with modifiers being added if desired.

16. Process according to one or more of Claims 1 to 15, characterized in that the spray concrete is placed in a mobile mixer.

17. Process according to one or more of the preceding claims, characterized in that the spray concrete is sprayed in such a way that the velocity at which it impinges on the surface to which it is to be applied is > 100 km/h.

18. Spray concrete for use in the process according to one or more of Claims 1 to 18, containing a mineral, hydraulic binder, in particular a low-sulphate binder, preferably Portland cement, Portland composite cement, blast furnace cement, slag Portland cement or alumina cement, and, if desired, customary additives and modifiers, where the components of the binder are matched to one another in such a way that a short reaction time for the hydraulic reaction is achieved, where the binder particles have, over at least part of their surface, a lamina encapsulation comprising a hydrophobicizing agent and, thereon, an alkali-free accelerator, and also a moist aggregate in customary amounts, with water being present in amounts of from 0.5 to 6% by mass.

19. Spray concrete according to Claim 19, characterized in that the alkali-free accelerator is attached to the hydrophobicizing encapsulation.

20. Spray concrete according to Claim 19 and/or 20, characterized in that stearic and/or oleic acid (fatty acids) are/is present as hydrophobicizing agent on the binder.

21. Spray concrete according to one or more of Claims 19 to 21, characterized in that waxes and/or salts of fatty acids are present as hydrophobicizing agent on the binder.

22. Spray concrete according to Claim 22, characterized in that sodium stearate, calcium stearate, ammonium stearate, aluminium stearate and zinc stearate are present as hydrophobicizing agent on the binder.

23. Spray concrete according to one or more of Claims 19 to 23, characterized in that resins and/or sodium oleate and/or calcium soaps and/or mineral oil emulsions are/is present as hydrophobicizing agent on the binder.

24. Spray concrete according to one or more of Claims 19 to 24, characterized in that silanes and/or siloxanes and/or silicone oils are present as hydrophobicizing agent on the binder.

25. Spray concrete according to one or more of Claims 19 to 25, characterized in that the binder comprises essentially a hydrophobicized, sulphate-reduced Portland cement.

26. Spray concrete according to Claim 26, characterized in that the binder has an SO₃ content of from 1 to 3%.

27. Spray concrete according to Claim 26 and/or 27, characterized in that the binder has an SO₃ content of 2 - 2.5%.

28. Spray concrete according to one or more of Claims 19 to 28, characterized in that synthetic silica, silica dust, silica emulsions and further known additives which influence the processability of the concrete are present as additives in the binder.

29. Spray concrete according to one or more of Claims 19 to 29, characterized in that the binder contains fluidizers and/or flow improvers and/or air pore formers and/or sealants and/or stabilizers as modifiers.

30. Spray concrete according to one or more of Claims 19 to 30, characterized in that the components of the binder are very finely milled.

31. Spray concrete according to one or more of Claims 19 to 31, characterized in that the alkali-free accelerator is an amorphous basic aluminium sulphate.

32. Spray concrete according to one or more of Claims 19 to 32, characterized in that the amorphous basic aluminium sulphate is a basic aluminium sulphate of the general formula Al(OH)ₐ(SO₄)_{b} where b = 0.04 to 0.4 and a = 3 to 2 × b.

33. Spray concrete according to one or more of Claims 19 to 33, characterized in that the alkali-free accelerator is present in amounts of from 0.2 to 6% by mass.

## Revendications

1. Procédé pour la préparation d'un béton projeté dans lequel on enduit un liant hydraulique minéral au moins en partie d'abord avec un agent rendant hydrophobe et ensuite, avec un accélérateur exempt d'alcali, puis on le mélange avec des agrégats minéraux humides dans des quantités habituelles, le cas échéant, avec des additifs et/ou avec des adjuvants et on entrepose pendant un laps de temps prédéfini le mélange ainsi obtenu pour augmenter la résistance initiale que l'on peut obtenir et ensuite on le projette de telle sorte que l'enveloppe du liant s'ouvre brusquement.

2. Procédé selon la revendication 1, caractérisé en ce que l'on soumet le béton projeté avant la projection à un entreposage préalable pendant un laps de temps 0,5 à 24 heures.

3. Procédé selon les revendications 1 et/ou 2, caractérisé en ce que l'on utilise à titre d'agrégats des pierres concassées et/ou du gravier et/ou des gravillons et/ou du sable comprenant des grains arrondis ou concassés.

4. Procédé selon une ou plusieurs des revendications 1 à 3, caractérisé en ce que l'on utilise des agrégats qui présentent une granulométrie de 0 à 8 mm.

5. Procédé selon les revendications 3 et/ou 4, caractérisé en ce que l'on utilise des agrégats qui présentent des courbes granulométriques B8 ou AB8 selon la norme DIN 1045.

6. Procédé selon une ou plusieurs des revendications 1 à 5, caractérisé en ce que l'on ajoute, à titre d'agrégats, des fibres métalliques et/ou organiques et/ou minérales.

7. Procédé selon la revendication 6, caractérisé en ce que l'on ajoute des fibres en acier et/ou en carbone et/ou en verre et/ou des fibres minérales.

8. Procédé selon une ou plusieurs des revendications 1 à 7, caractérisé en ce que l'on ajoute, à titre d'agrégats, des agrégats légers organiques et/ou minéraux.

9. Procédé selon la revendication 8, caractérisé en ce que l'on ajoute, à titre d'agrégats légers, des billes de mousse de polystyrène et/ou de la ponce et/ou de la perlite et/ou de la zéolithe et/ou du verre mousse et/ou des microbilles creuses en verre.

10. Procédé selon une ou plusieurs des revendications 1 à 9, caractérisé en ce que l'on ajoute, à titre d'additifs, de la poudre de silice et/ou des émulsions de silice et/ou de l'acide silicique synthétique, ainsi que, le cas échéant, d'autres additifs connus pour influencer l'aptitude au traitement.

11. Procédé selon une ou plusieurs des revendications 1 à 10, caractérisé en ce que l'on ajoute, à titre d'adjuvants, des liquéfiants et/ou des fluidifiants et/ou des formateurs de cavités et/ou des agents d'étanchéisation et/ou des stabilisateurs.

12. Procédé selon une ou plusieurs des revendications 1 à 11, caractérisé en ce que l'on utilise les agrégats à l'état naturellement humide.

13. Procédé selon une ou plusieurs des revendications 1 à 12, caractérisé en ce que l'on utilise les agrégats avec une humidité de 0,5 à 6 % en masse.

14. Procédé selon une ou plusieurs des revendications 1 à 13, caractérisé en ce que l'on utilise les agrégats avec une humidité de 2 à 4 % en masse.

15. Procédé selon une ou plusieurs des revendications 1 à 14, caractérisé en ce que l'on dépose au préalable et on mélange les agrégats et, le cas échéant des additifs dans un dispositif de mélange, puis on ajoute le mélange de liant et on poursuit le mélange en ajoutant le cas échéant des adjuvants.

16. Procédé selon une ou plusieurs des revendications 1 à 15, caractérisé en ce que l'on charge le béton projeté dans un camion malaxeur.

17. Procédé selon une ou plusieurs des revendications précédentes, caractérisé en ce que l'on projette le béton projeté de telle sorte que la vitesse au choc sur la surface de traitement est > 100 km/h.

18. Béton projeté pour être utilisé dans le procédé selon une ou plusieurs des revendications 1 à 17, contenant un liant minéral hydraulique, en particulier un liant pauvre en sulfate, de préférence du ciment Portland, du ciment Portland composite, du ciment de haut fourneau, du ciment Portland de fer ou du ciment alumineux et, le cas échéant, des additifs et des adjuvants habituels, les composants du liant étant adaptés les uns aux autres de telle sorte que l'on obtient un bref temps de réaction pour la réaction hydraulique, dans lequel les granules du liant présentent, au moins en partie, une enveloppe stratifiée constituée par un agent rendant hydrophobe et par-dessus ce dernier par un accélérateur exempt d'alcali, ainsi qu'un agrégat humide dans des quantités habituelles, de l'eau étant présente dans des quantités de 0,5 à 6 % en masse.

19. Béton projeté selon la revendication 18, caractérisé en ce que l'accélérateur exempt d'alcali est fixé à l'enveloppe rendant hydrophobe.

20. Béton projeté selon les revendications 18 et/ou 19, caractérisé en ce que le liant présente, à titre d'agent rendant hydrophobe, de l'acide stéarique et/ou de l'acide oléique (acides gras).

21. Béton projeté selon une ou plusieurs des revendications 18 à 20, caractérisé en ce que le liant présente, à titre d'agent rendant hydrophobe, des cires et/ou des sels des acides gras.

22. Béton projeté, selon la revendication 21, caractérisé en ce que le liant présente, à titre d'agent rendant hydrophobe, du stéarate de sodium, du stéarate de calcium, du stéarate d'ammonium, du stéarate d'aluminium et du stéarate de zinc.

23. Béton projeté selon une ou plusieurs des revendications 18 à 22, caractérisé en ce que le liant présente, à titre d'agent rendant hydrophobe, des résines et/ou des oléates de sodium et/ou des savons de chaux et/ou des émulsions d'huiles minérales.

24. Béton projeté selon une ou plusieurs des revendications 18 à 23, caractérisé en ce que le liant présente, à titre d'agent rendant hydrophobe, des silanes et/ou des siloxanes et/ou des huiles de silicone.

25. Béton projeté selon une ou plusieurs des revendications 18 à 24, caractérisé en ce que le liant présente essentiellement un ciment Portland rendu hydrophobe dont la teneur en sulfate a été réduite.

26. Béton projeté selon la revendication 25, caractérisé en ce que le liant présente une teneur en SO₃ de 1 à 3 %.

27. Béton projeté selon les revendications 25 et/ou 26, caractérisé en ce que le liant présente une teneur en SO₃ de 2 à 2,5 %.

28. Béton projeté selon une ou plusieurs des revendications 18 à 27, caractérisé en ce que le liant présente, à titre d'additifs, de l'acide silicique synthétique, de la poudre de silice, des émulsions de silice et d'autres additifs connus influençant l'aptitude au traitement du béton.

29. Béton projeté selon une ou plusieurs des revendications 18 à 28, caractérisé en ce que le liant contient, à titre d'adjuvants, des liquéfiants et/ou des fluidifiants et/ou des formateurs de cavités et/ou des agents d'étanchéisation et/ou des stabilisateurs.

30. Béton projeté selon une ou plusieurs des revendications 18 à 29, caractérisé en ce que les composants du liant ont été très finement broyés.

31. Béton projeté selon une ou plusieurs des revendications 18 à 30, caractérisé en ce que l'accélérateur exempt d'alcali est un sulfate d'aluminium basique amorphe.

32. Béton projeté selon une ou plusieurs des revendications 18 à 31, caractérisé en ce que le sulfate d'aluminium basique amorphe est un sulfate d'aluminium basique répondant à la formule générale Al(OH)ₐ(SO₄)_{b} où b = 0,04 à 0,4 et a = de 3 à 2 x b.

33. Béton projeté selon une ou plusieurs des revendications 18 à 32, caractérisé en ce que l'accélérateur exempt d'alcali est contenu dans des quantités de 0,2 à 6 % en masse.
